**Europäisches Patentamt**

**European Patent Office**

**Office européen des brevets**

(19)

(11) Publication number: **0 041 799**
**B1**

(12) **EUROPEAN PATENT SPECIFICATION**

(45) Date of publication of patent specification: **14.03.84**

(51) Int. Cl.³: **H 04 R 1/16**

(21) Application number: **81302362.9**

(22) Date of filing: **28.05.81**

(54) Stereophonic pick-up cartridges.

(30) Priority: **05.06.80 JP 75950/80**

(43) Date of publication of application:
**16.12.81 Bulletin 81/50**

(45) Publication of the grant of the patent:
**14.03.84 Bulletin 84/11**

(84) Designated Contracting States:
**DE FR GB NL SE**

(56) References cited:
**CH - A - 438 775**
**DE - A - 2 901 714**
**US - A - 3 926 441**

(73) Proprietor: **SONY CORPORATION**
**7-35 Kitashinagawa 6-Chome Shinagawa-ku**
**Tokyo 141 (JP)**

(72) Inventor: **Mori, Yoshihisa**
**6-16-2 Shimoma Setagaya-ku**
**Tokyo (JP)**
Inventor: **Takashima, Mitsuru**
**1-15-2-506 Minamiyukigaya**
**Ohta-ku Tokyo (JP)**

(74) Representative: **Thomas, Christopher Hugo et al,**
**D Young & Co 10 Staple Inn**
**London WC1V 7RD (GB)**

Courier Press, Leamington Spa, England.

Stereophonic pick-up cartridges

This invention relates to stereophonic pick-up cartridges, and is particularly concerned with the supporting mechanism for the armature of a pick-up cartridge.

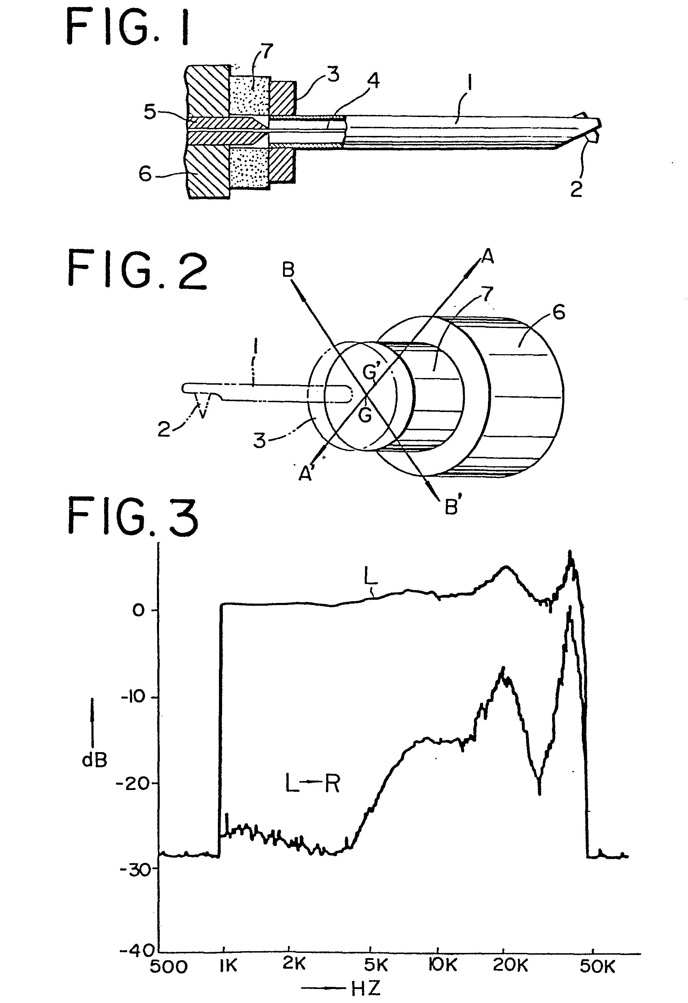

Generally, the supporting mechanism for the armature of a pick-up cartridge of the moving magnet or moving coil type is as illustrated in Figures 1 and 2 of the accompanying drawings.

As shown in Figure 1, a hollow cantilever 1 has a stylus 2 on one end thereof and carries an armature 3 at the other end. The armature 3 would be a magnet if the cartridge is a moving magnet type or it would comprise a coil bobbin including coils if the cartridge is of a moving coil type. The armature 3 is generally disc-shaped and is attached to the rear end of the cantilever 1, with the cantilever 1 extending through a central opening formed in the armature 3. A piano wire 4 extends through the opening in the armature 3 and the opening through the cantilever 1 and has one end attached to a suspension sleeve 5 which is connected to an axial bore of a metallic holder 6. The other end of the wire 4 is connected to the cantilever 1 adjacent to the stylus 2. Between the end plane of the holder 6 and the armature 3 is mounted a cylindrical damper 7 so as to allow the cantilever 1 to move in response to tracking of the stylus 2 in the grooves on a record. The damper 7 has a central aperture for the wire 4 and the sleeve 5 and may be made from a flexible substance such as rubber. The armature 3 is firmly pressed against the damper 7 by the tension of the wire 4.

Figure 2 is an enlarged perspective view of parts of the cartridge of Figure 1. With the construction illustrated in Figure 1, it is difficult to eliminate vibration-induced mutual interference of the armature 3 in the directions indicated by the arrows A—A' which is identified as "vibration in the right channel direction" and which results from transducing the right channel electrical signals from one wall of a groove of a record, and the direction indicated by arrows B—B' which is identified as "vibration in the left channel direction" and which results from transducing the left channel electrical signals from the other wall of the groove on the record. This is because a movement of the cantilever 1 when vibrating in the direction A—A', for example, applies a force which resiliently deforms the damper 7, and, as this deformation is transmitted through the damper 7, the effect is to move a central axis G of the armature 3. This affects movement of the cantilever 1 in the left direction B—B' causing cross-talk between the two channels.

For this reason, separation between the left and right channel electrical signals from the stereophonic pick-up cartridge is degradated.

Figure 3 is a plot of the output frequency response of the left channel signals L and the output frequency response of cross-talk of the left channel electrical signals with the right channel indicated as L→R.

According to the present invention there is provided a stereophonic pick-up cartridge comprising a cantilever having a stylus on a free end thereof and an armature at the rear end thereof, a fixed support, and a damper having a first plane surface abutting said fixed support and a second plane surface abutting said armature, grooves being formed in said second plane surface of said damper, characterised in that said grooves are open and extend radially from a central axis of said damper through the periphery of said damper, a first pair of said grooves have longitudinal directions which in use of the cartridge are parallel to the surface of a record disc and a second pair of said grooves have longitudinal directions which in use of the cartridge are normal to the surface of said record disc.

West German Offenlegungsschrift 29 01 714 and US specification 3 926 441 referred to in the European search report disclose dampers with grooves, but these grooves are different in configuration and effect from those in embodiments of the present invention.

The invention will now be described by way of example with reference to the accompanying drawings, in which:

Figure 1 is a partially sectional view of part of a previously proposed pick-up cartridge;

Figure 2 is a perspective view of part of the cartridge of Figure 1;

Figure 3 is a plot of frequency response illustrating cross-talk in the cartridge of Figures 1 and 2;

Figure 4 is a cross-sectional view of an embodiment of moving coil type stereophonic pick-up cartridge according to the invention;

Figure 5 is a perspective view of a cylindrical damper of the cartridge of Figure 4;

Figure 6 is an elevational view of the damper of Figure 5 and indicates the location of the coils of the cartridge; and

Figure 7 is a plot of the frequency response and cross-talk of the embodiment.

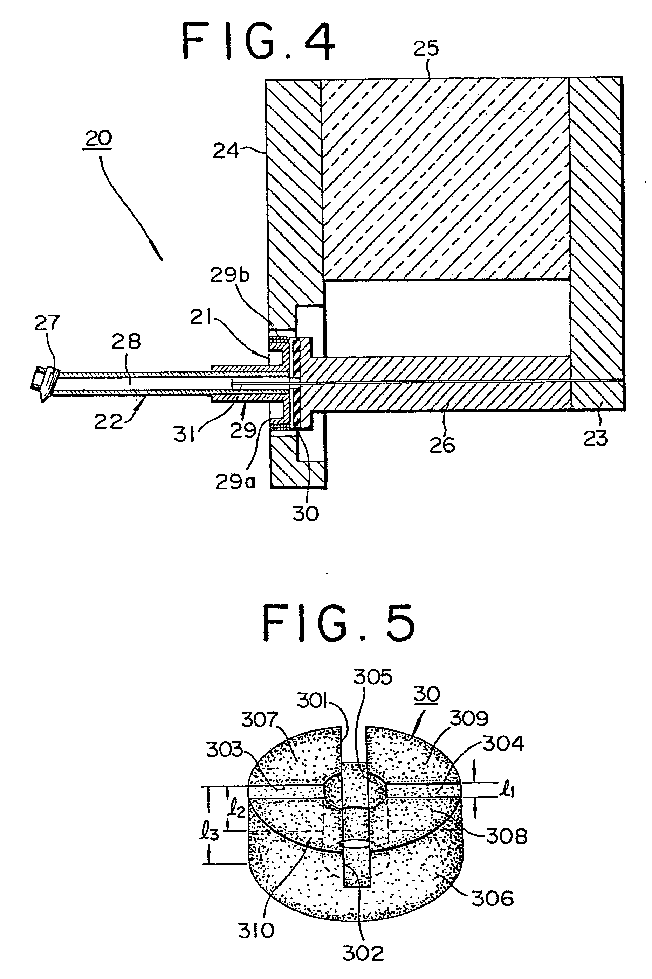

Figure 4 illustrates an embodiment of stereophonic moving coil type cartridge 20 according to the invention. The invention is equally applicable to a permanent magnet type cartridge. The cartridge 20 includes a magnetic circuit 21 and a vibration system 22. The magnetic circuit 21 includes a pair of yokes 23 and 24 at one end, and a pole piece 26 fixed between the other ends of the yokes 23 and 24. The vibration system 22 includes a stylus 27 mounted on the end of a cantilever 28 and an armature 29 is mounted on the other end of the cantilever 28. The rear end of the armature 29 is generally disc-shaped as shown and rests on a cylindrical damper 30 made of a flexible material such as butyl rubber and which has one major surface abutting the pole piece 26 and the other major surface abutting the armature 29. A piano wire 31 is secured to the pole piece 26 by a screw or other means (not shown) and the other end is attached to the cantilever 28. The armature 29 is firmly pressed against the damper 30 due to the tension in the wire 31.

The armature 29 comprises a coil bobbin 29a and coils 29b. The shape of the coils 29b and the bobbin 29a are visible in Figure 4. For more details relating generally to stereophonic pick-up cartridges reference may be made to our US patent specification 4 090 039.

Figure 5 is an enlarged detailed perspective view of the damper 30. The damper 30 has crossed rectangular cross-section grooves 301, 302, 303 and 304 which extend from a central aperture 305 to the outer periphery 306 formed in the surface which abuts the armature 29. The grooves 301 to 304 divide the surface of the damper 30 into four portions 307, 308, 309 and 310. As shown, the grooves 301 to 304 are open and extend in from the engaging surface of the damper 30 with the armature 29 and the grooves 301 and 302 are normal to the grooves 303 and 304. As seen in Figure 4, one pair of the grooves 301 to 304 have longitudinal directions which in use of the cartridge are normal to the surface of the record disc and therefore the other pair of the grooves 301 to 304 have longitudinal directions which in use of the cartridge are parallel to the surface of the record disc.

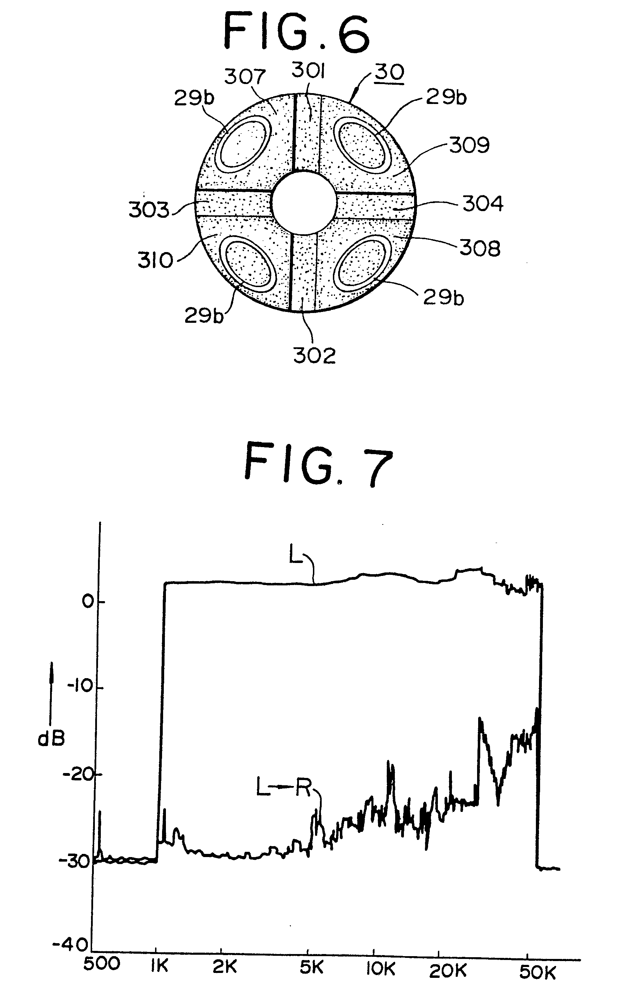

The coils 29b are wound on the coil bobbin 29a and are located above each of the abutting portions 307 to 310 as indicated in Figure 6. The widths of the grooves 301 to 304 can be 0.3 mm if the diameter of the damper 30 is 2.5 mm, and the depths $l_2$ of the grooves 301 to 304 can be equal to one-half of the thickness $l_3$ of the damper 30 as illustrated in Figure 5. The grooves 301 to 304 substantially eliminate transmission of deformation between the left and right channel directions in the damper 30, while allowing full movement of the armature 29 relative to the damper 30. Due to the substantial elimination of this transmission of deformation, cross-talk between the left and right channels will also be substantially reduced.

Figure 7 comprises a plot of the output frequency response of the channel signals L as well as the output frequency of the cross-talk response comprising the left channel electrical signals relative to the right channel electrical signals L→R. It is to be noted that as can be seen by comparing Figure 7 with Figure 3 that the cross-talk response in Figure 7 is much less than that illustrated in Figure 3. Thus, much improved frequency response is achieved particularly at higher frequencies.

## Claims

1. A stereophonic pick-up cartridge comprising a cantilever (28) having a stylus (27) on a free end thereof and an armature (29) at the rear end thereof, a fixed support (26), and a damper (30) having a first plane surface abutting said fixed support (26) and a second plane surface abutting said armature (29), grooves (301 to 304) being formed in said second plane surface of said damper (30), characterised in that said grooves (301 to 304) are open and extend radially from a central axis of said damper (30) through the periphery (306) of said damper (30), a first pair of said grooves (301 to 304) have longitudinal directions which in use of the cartridge are parallel to the surface of a record disc and a second pair of said grooves (301 to 304) have longitudinal directions which in use of the cartridge are normal to the surface of said record disc.

2. A cartridge according to claim 1 wherein in use said cantilever (28) moves in a first direction which is parallel to one wall of a signal groove of a record disc and moves in a second direction which is parallel to the other wall of said signal groove of said record disc.

3. A cartridge according to claim 1 or claim 2 wherein said armature (29) is held firmly pressed against said second plane surface of said damper (30) by a tensioned wire (31).

4. A cartridge according to claim 1 or claim 2 wherein said damper (30) is cylindrical.

5. A cartridge according to any one of the preceding claims wherein the depths of said grooves (301 to 304) are equal to one-half of the thickness of said damper (30).

6. A cartridge according to any one of the preceding claims wherein the widths of said grooves (301 to 304) are 0.3 mm and said damper (30) is cylindrical and of diameter 2.5 mm.

## Patentansprüche

1. Stereo-Tonabnehmer mit einem einseitig eingespannten Stab (28), an dessen freiem Ende eine Nadel (27) und an dessen rückwärtigem Ende eine Verankerung (29) vorhanden sind; mit einer fest angebrachten Halterung (26); und mit einem Dämpfer (30), der eine erste plane Oberfläche hat, die an der Halterung (26) anliegt und der eine zweite plane Oberfläche hat, die an der Verankerung (29) anliegt, wobei grabenförmige Vertiefungen (301—304) in dieser zweiten planen Oberfläche des Dämpfers (30) vorhanden sind, gekennzeichnet dadurch, daß diese grabenförmigen Vertiefungen (301—304) offen sind und sich radial von einer zentralen Achse dieses Dämpfers (30) ausgehend durch den Umfang (306) dieses Dämpfers (30) erstrecken; daß ein erstes Paar dieser grabenförmigen Vertiefungen (301—304) longitudinale Ausrichtungen hat, die im Betrieb des Tonabnehmers parallel zur Oberfläche einer Schallplatte sind, und daß ein zweites Paar dieser grabenförmigen Vertiefungen (301—304) longitudinale Ausrichtungen hat, die im Betrieb des Tonabnehmers zur Oberfläche dieser Schallplatte in Normalen Richtung liegen.

2. Tonabnehmer nach Anspruch 1, bei dem im Betrieb dieser Stab (28) sich in einer ersten Richtung bewegt, die parallel zu der einen Wand einer Aufzeichnungsrille einer Schallplatte ausgerichtet ist, und sich in einer zweiten Richtung bewegt, die parallel zur anderen Wand dieser Aufzeichnungsrille dieser Schallplatte ist.

3. Tonabnehmer nach Anspruch 1 oder 2, bei den diese Verankerung (29) gegen diese zweite plane Oberfläche des Dämpfers (30) mit Hilfe eines gespannten Drahtes (31) fest angepreßt gehalten ist.

4. Tonabnehmer nach Anspruch 1 oder 2, bei dem dieser Dämpfer (30) Zylinderform hat.

5. Tonabnehmer nach einem der Ansprüche 1 bis 4, bei dem die Tiefen dieser grabenförmigen Vertiefungen (301—304) gleich der halben Dicke diese Dämpfers (30) bemessen sind.

6. Tonabnehmer nach einem der Ansprüche 1 bis 5, bei dem die Breiten dieser grabenförmigen Vertiefungen (301—304) 0,3 mm betragen und bei dem dieser Dämpfer (30) zylindrische Form mit 2,5 mm Durchmesser hat.

**Revendications**

1. Cartouche de lecture stéréophonique, comprenant une pièce en porte-à-faux (28) portant un style (27) à son extrémité libre et une armature (29) à son extrémité arrière, un support fixe (26) et un amortisseur (30) comportant une première surface plane s'appuyant sur le support fixe (26) et une seconde surface plane s'appuyant sur ladite armature (29), des rainures (301 à 304) étant formées dans ladite seconde surface plane dudit amortisseur (30), caractérisée en ce que lesdites rainures (301 à 304) sont ouvertes et s'étendent radialement à partir d'un axe central dudit amortisseur (30) par la périphérie (308) dudit amortisseur (30), une première paire desdites rainures (301 à 304) ayant des directions longitudinales qui, dans l'utilisation de la cartouche, sont parallèles à la surface d'un disque d'enregistrement et une seconde paire desdites rainures (301 à 304) ayant des directions longitudinales qui, dans l'utilisation de la cartouche, sont normales à la surface dudit disque d'enregistrement.

2. Cartouche selon la revendication 1, dans laquelle en utilisation, ladite pièce en porte-à-faux (28) se déplace dans une première direction qui est parallèle à une paroi d'un sillon de signaux d'un disque d'enregistrement et se déplace dans une seconde direction qui est parallèle à l'autre paroi dudit sillon de signaux dudit disque d'enregistrement.

3. Cartouche selon la revendication 1 ou 2, dans laquelle ladite armature (29) est maintenue fermement pressée contre ladite seconde surface plane dudit amortisseur (30) par un fil tendu (31).

4. Cartouche selon la revendication 1 ou 2, caractérisée en ce que ledit amortisseur (30) est cylindrique.

5. Cartouche selon l'une quelconque des revendications précédentes, dans laquelle les profondeurs desdites rainures (301 à 304) sont égales à la moitié de l'épaisseur dudit amortisseur (30).

6. Cartouche dans l'une quelconque des revendications précédentes, dans laquelle les largeurs desdites rainures (301 à 304) sont 0,3 mm et ledit amortisseur (30) est cylindrique avec un diamètre de 2,5 mm.

# FIG. 1

# FIG. 2

# FIG. 3

1

# FIG.4

# FIG.5

# FIG. 6

# FIG. 7